# EUROPÄISCHE PATENTSCHRIFT

(11) **EP 3 167 169 B1**
(45) Veröffentlichungstag und Bekanntmachung des Hinweises auf die Patenterteilung: **06.06.2018**
(21) Anmeldenummer: 15734636.2
(22) Anmeldetag: 01.07.2015
(51) Int. Cl.: F01L 1/047, B23P 11/02, F16H 53/02, F01L 13/00

(54) **VERFAHREN ZUR ANORDNUNG EINER NOCKENWELLE IN EINEM NOCKENWELLENMODUL**
METHOD OF MOUNTING A CAMSHAFT IN A CAMSHAFT MODULE
PROCÉDÉ DE MONTAGE D'UN ARBRE À CAMES DANS UN MODULE D'ARBRE À CAMES

(30) Priorität: 11.07.2014 DE 102014109751
(43) Veröffentlichungstag der Anmeldung: 17.05.2017
(73) Patentinhaber: ThyssenKrupp Presta TecCenter AG, 9492 Eschen (LI)
(72) Erfinder: STAPELMANN, Andreas, 09112 Chemnitz (DE); HARTWIG, Michael, 31226 Peine (DE); ILGEROTH, Mario, 06502 Thale (DE); ALTAG, Frank, 38321 Denkte (DE); CURLIC, Marko, 9486 Schaanwald (LI); PFITSCHER, Aaron, A-6713 Ludesch (AT)
(74) Vertreter: thyssenkrupp Intellectual Property GmbH
(86) Internationale Anmeldenummer: PCT/EP2015/064927
(87) Internationale Veröffentlichungsnummer: WO 2016/005237

(56) Entgegenhaltungen:
- EP-A1- 1 936 131
- WO-A1-2011/072782
- DE-A1-102007 027 979
- DE-A1-102011 109 256
- DE-A1-102011 111 580

## Beschreibung

Die vorliegende Erfindung betrifft ein Verfahren zur Anordnung einer Nockenwelle in einem Nockenwellenmodul für den Ventiltrieb einer Brennkraftmaschine, wobei das Nockenwellenmodul ein Modulgehäuse aufweist, in dem die wenigstens eine Nockenwelle angeordnet wird, wobei die Nockenwelle zumindest ein Verschiebeelement mit einem Trägerrohr, mit wenigstens zwei Nockenelementen zur Ventilbetätigung und mit einem Schaltelement zur axialen Verstellung des Verschiebeelementes im Modulgehäuse aufweist, und wobei die Nockenelemente und das Schaltelement auf dem Trägerrohr so aufgebraucht werden, dass ein zwischenliegender Lagerabschnitt zur Lagerung des Verschiebeelementes in einer Lagerbrücke des Modulgehäuses gebildet wird.

### STAND DER TECHNIK

Nockenwellenmodule dienen zur Aufnahme von wenigstens einer oder vorzugsweise von zwei Nockenwellen in einer Anordnung parallel zueinander, und die Nockenwellen können einsatzfertig in das Modulgehäuse eingebaut werden oder erst nach Einbau fertigbearbeitet werden. Das Nockenwellenmodul kann dann als betriebsbereites Modul beispielsweise auf dem Zylinderkopf einer Brennkraftmaschine angeordnet werden, sodass die Nockenelemente der Nockenwellen mit den Abgriffselementen zur Steuerung der Ventile zusammenwirken können. Dabei finden auch verstellbare Nockenwellen Verwendung in Anordnung in einem Nockenwellenmodul, und verstellbare Nockenwellen weisen Verschiebeelemente auf, und mit Vorteil können die Nockenwellen über die Verschiebeelemente in Lagerbrücken des Modulgehäuses angeordnet werden. Die Verschiebeelemente tragen dabei die Nockenelemente und ein Schaltelement zur axialen Verschiebung des Verschiebeelementes auf einem Trägerrohr. Zur Verschiebung dienen Aktuatorstifte, die mit den Schaltelementen wechselwirken können, um das Verschiebeelement beispielsweise zwischen zwei oder drei Axialpositionen hin und her zu schalten. Dadurch können die Abgriffselemente mit Nockenelementen verschiedener Nockenkonturen zusammenwirken, um die Ventile mit verschiedenen Steuerzeiten anzusteuern.

In einem Modulgehäuse können mehrere Verschiebeelemente in einer gemeinsamen Mittelachse fluchtend aufgenommen werden, die in einer gemeinsamen Mittelachse drehbar sind und erst anschließend kann eine Zahnwelle durch die Verschiebeelemente hindurchgeführt werden, um diese gemeinsam drehend anzutreiben und um schließlich eine einsatzfertige Nockenwelle zu bilden. Dazu wird zunächst vorgesehen, jedes Verschiebeelement in einer eigenen Lagerbrücke aufzunehmen, die im Modulgehäuse ausgebildet sind. Um die Verschiebeelemente in den Lagerbrücken aufzunehmen, müssen diese geteilt ausgeführt sein, da in der Regel beidseitig des zwischenliegenden Lagerabschnittes Nockenelemente angeordnet sind. Da der Lagerabschnitt des Verschiebeelementes, der in der Regel gebildet wird durch die Außenseite des Trägerrohres oder durch einen aufgebrachten Lagerring, kleiner ausgebildet ist als die Nockenelemente, kann das Verschiebeelement nicht ohne Weiteres in einen nicht geteilten Lagerabschnitt zum Beispiel seitlich eingeführt werden.

Beispielsweise zeigt die DE 10 2004 011 586 A1 ein Nockenwellenmodul, in dem zwei Nockenwellen mit jeweiligen Verschiebeelementen aufgenommen werden können. Damit die Verschiebeelemente in den Lagerbrücken aufgenommen werden können, sind die Lagerbrücken geteilt ausgeführt. Dadurch entstehen zusätzliche Bearbeitungs- und Montagevorgänge, und es müssen mehrere Einzelteile zur Verfügung gestellt werden, beispielsweise die Schraubelemente zur Verschraubung der Lagerhalbschalen an den Grundkörper des Modulgehäuses. Zudem muss darauf geachtet werden, dass die Lagerhalbschalen bei der Montage nicht untereinander vertauscht werden. Wünschenswert ist daher ein Modulgehäuse mit ungeteilten Lagerbrücken, in die die Verschiebeelemente eingebracht werden können.

In der WO 2011/072782 A1 ist ein Verfahren, insbesondere eine Montage einer Nockeneinheit in einer Lageraufnahme zur Lagerung einer gebauten Nockenwelle beschrieben. Hierfür wird eine aus einzelnen Bauteilen vormontierte Nockeneinheit seitlich in eine Lageraufnahme eingeschoben und an ihrem freien Ende mit Funktionselementen bestückt. Zur Lagerung der gebauten Nockenwelle müssen jedoch entsprechende Lagerelemente, wie Gleitlagerpartner bereits in die Lageraufnahme montiert sein.

### OFFENBARUNG DER ERFINDUNG

Aufgabe der Erfindung ist die Weiterbildung eines Verfahrens zur Anordnung einer Nockenwelle in einem Nockenwellenmodul, das die Anordnung von Verschiebeelementen der Nockenwelle in ungeteilte Lagerbrücken ermöglicht.

Diese Aufgabe wird ausgehend von einem Verfahren zur Anordnung einer Nockenwelle in einem Nockenwellenmodul gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Zur Lösung der Aufgabe wird vorgeschlagen, dass das Verfahren wenigstens die folgenden Schritte aufweist:
- Anordnen der Nockenelemente und des Schaltelementes unter Bildung des Lagerabschnittes auf dem Trägerrohr zur Bereitstellung des Verschiebeelementes außerhalb des Modulgehäuses,
- Durchtrennen des Trägerrohres im Bereich des Lagerabschnittes in zwei Teile durch ein Trennverfahren,
- Anordnen einer Verbindungshülse an einem der beiden Teile,
- Einführen eines der beiden Teile in die Lagerbrücke im Modulgehäuse und
- Fügen des weiteren Teils an das in die Lagerbrücke eingeführte Teil.

Das erfindungsgemäße Verfahren geht von dem Gedanken aus, das Verschiebeelement mit dem Trägerrohr, den Nockenelementen und dem Schaltelement außerhalb des Modulgehäuses fertig zu konfektionieren und einsatzfertig bereitzustellen. Anschließend erfolgt ein Durchtrennen des Trägerrohres, sodass das Verschiebeelement in zwei Teile geteilt wird. Dadurch kann das Verschiebeelement mit einem ersten Teil von einer ersten Seite in die Lagerbrücke geführt werden und mit dem weiteren Teil verbunden werden. Im Ergebnis kann so das Verschiebeelement drehbar in eine geschlossene, einteilige Lagerbrücke im Modulgehäuse eingesetzt werden, und es erfolgt nur noch ein Fügen der beiden Teile des Verschiebeelementes, während wenigstens ein Teil oder beide Teile teilweise in wenigstens einem Abschnitt der Lagerbrücke einsitzen. Sind ein oder mehrere Verschiebeelemente mit dem erfindungsgemäßen Verfahren in jeweilige Lagerbrücken des Modulgehäuses eingesetzt worden, kann schließlich noch eine Zahnwelle durch die Verschiebeelemente hindurchgeführt werden, mit denen diese angetrieben werden und die die Nockenwelle vervollständigt. Die Nockenelemente können dabei einteilig oder zweiteilig ausgebildet sein und ein Nockenelement oder Nockenelementepaar kann sich auf dem einen Teil des durchtrennten Trägerrohres befinden und ein weiteres Nockenelement oder Nockenelementepaar kann sich auf dem anderen Teil des durchtrennten Trägerrohres befinden.

Mit besonderem Vorteil kann das außerhalb des Modulgehäuses bereitgestellte Verschiebeelement durch wenigstens ein spanendes Bearbeitungsverfahren einsatzfertig bearbeitet werden. Das einsatzfertige Bearbeiten kann beispielsweise durch ein Schleifverfahren und gegebenenfalls noch durch ein anschließendes Polierverfahren insbesondere der Nockenelemente vorgenommen werden. Der Vorteil der einsatzfertigen Bearbeitung der vollständig konfektionierten Verschiebeelemente liegt darin, dass auftretender Schleifstaub bei einer Schleifbearbeitung beispielsweise der Nockenelemente nicht in das Modulgehäuse eindringt, wie bei einem spanenden Bearbeitungsverfahren der Nockenwelle in Anordnung im Modulgehäuse. Dadurch ergeben sich vereinfachte Reinigungsmöglichkeiten der vereinzelten Schiebeelemente, bevor diese mit dem erfindungsgemäßen Verfahren im Modulgehäuse des Nockenwellenmoduls eingebracht werden.

Die Verbindungshülse kann mit besonderem Vorteil außenseitig auf dem Lagerabschnitt des Trägerrohres angeordnet werden. Mit anderen Worten können die Teile des Trägerrohres in die Verbindungshülse eingeschoben werden, wobei die Verbindungshülse eine Länge aufweisen kann, die so bemessen ist, dass sich die Trägerrohre beispielsweise nach Einführen in die Verbindungshülse wieder wenigstens fast berühren. Innenseitig in dem Trägerrohr ist eine Zahnstruktur eingebracht, die mit der Zahnwelle der Nockenwelle in Eingriff steht, sodass bei einer Rotation der Zahnwelle die Verschiebeelemente mitrotieren, jedoch axial verschieblich auf der Zahnwelle beziehungsweise in der Lagerbrücke aufgenommen sind. Diese Funktion wird durch das Teilen des Trägerrohres nicht beeinflusst.

Die Verbindungshülse kann außenseitig auf den Lagerabschnitt des Trägerrohres aufgepresst, aufgeschrumpft oder aufgeklebt werden. Dabei kann die Verbindungshülse sowohl außenseitig, vorzugsweise auch innenseitig eine geschliffene Oberfläche aufweisen, denn mit einer geschliffenen Innenoberfläche und/oder einer geschliffenen Außenumfangsfläche können sehr enge Toleranzen eingehalten werden, die für die Verbindungshülse notwendig ist. Verbindet die Verbindungshülse die beiden getrennten Teile des Trägerrohres miteinander, so kann die Außenumfangsfläche der Verbindungshülse die Lagerfläche zur Bildung eines Gleitlagers in der Lagerbrücke bilden. Daher ist das Toleranzmaß der Außenumfangsfläche der Verbindungshülse sowie die Oberflächenqualität von entsprechender Bedeutung. Eine eng tolerierte Innenoberfläche ist für eine entsprechende Presspassung der Verbindungshülse auf dem Trägerrohr notwendig. Das Einpressen des Trägerrohres kann damit als Längspressverband oder als Querpressverband erfolgen. Beim Längspressverband werden die beiden Teile des Trägerrohres in die Verbindungshülse axial eingepresst, bei einem Querpressverband wird die Verbindungshülse aufgeheizt und/oder die Teile des Trägerrohres werden abgekühlt, um schließlich bei einem Temperaturausgleich kraftschlüssig miteinander verbunden zu werden. Klebeverfahren oder sonstige Verfahren können auch Verwendung finden, um die Teile des Trägerrohres sicher in der Verbindungshülse einzubringen.

Das Trägerrohr kann bei der spanenden Bearbeitung des Verschiebeelementes so geschliffen werden, dass dieses im Bereich des Lagerabschnittes auf einen kleineren Durchmesser geschliffen wird, bevor dieses durch ein Trennverfahren in zwei Teile geteilt wird. Der Abschnitt des kleineren Durchmessers bildet später den Abschnitt, mit dem das geteilte Trägerrohr von beiden Seiten in die Verbindungshülse eingebracht wird, und die Außenseite der Verbindungshülse kann beispielsweise einen gleichen oder wenigstens ähnlichen Durchmesser aufweisen wie das übrige Trägerrohr. Damit können auch Standarddurchmesser von Lagerbrücken in Modulgehäusen Verwendung finden, da die Verbindungshülse den kleineren Durchmesser des Trägerrohres wieder ausgleicht, sodass das Modulgehäuse für die erfindungsgemäß eingebrachten Verschiebeelemente in die Lagerbrücken nicht angepasst werden muss.

Das Trennverfahren zur Teilung des Trägerrohres kann durch ein Sägeverfahren, durch ein Trennschleifverfahren oder durch ein thermisches Trennverfahren, beispielweise durch ein Laserstrahlschneidverfahren, gebildet werden. Ist das Trägerrohr geteilt worden, so können die Trennflächen des Trägerrohres bearbeitet werden, insbesondere durch eine spanende Bearbeitung. Insbesondere können Einführfasen an die Trennfläche angebracht werden, sodass das Einpressen des jeweils freien Endes des durchtrennten Trägerrohres in die Verbindungshülse erleichtert wird.

Als letzten Schritt umfasst das Verfahren schließt das Einbringen der Zahnwelle in das wenigstens eine und vorzugsweise in mehrere Verschiebeelemente hintereinander zur Vervollständigung des Nockenwellenmoduls.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematisierte Ansicht eines Verschiebeelementes in einem einsatzfertigen Zustand,
- Figur 2: das Verschiebeelement gemäß Figur 1 mit einem erfindungsgemäß durchtrennten Trägerrohr,
- Figur 3: ein Teil des Verschiebeelementes, mit einem Trägerrohr, auf das eine Verbindungshülse aufgebracht ist,
- Figur 4: eine Anordnung des Teils des Verschiebeelementes mit der Verbindungshülse gemäß Figur 3 in einer Lagerbrücke eines Modulgehäuses und
- Figur 5: eine schematische Ansicht eines Nockenwellenmoduls mit einem Modulgehäuse, in dem ein Verschiebeelement mit dem erfindungsgemäßen Verfahren in einer Lagerbrücke angeordnet ist.

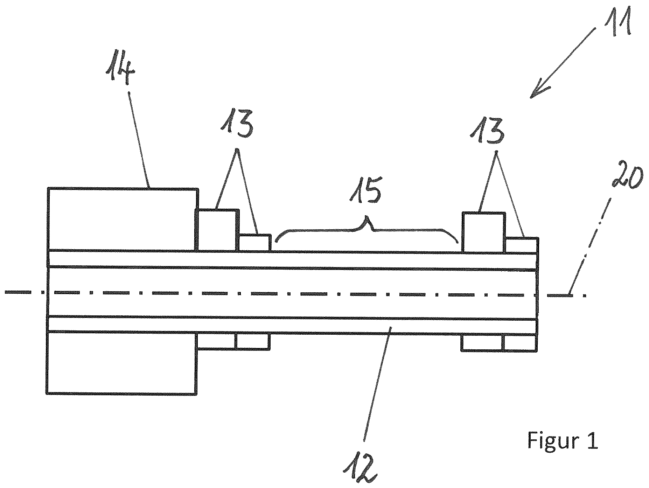

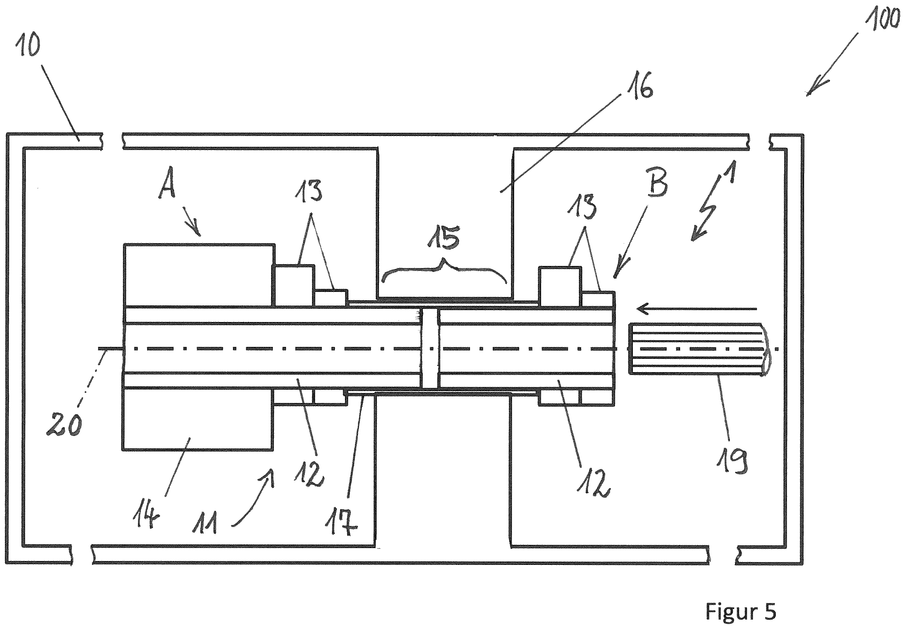

Figur 1 zeigt ein Verschiebeelement 11 zur Anordnung in einem Modulgehäuse 10 eines Nockenwellenmoduls 100, wie in Figur 5 dargestellt.

Das Verschiebeelement 11 weist ein Trägerrohr 12 auf, und auf der Außenseite des Trägerrohres 12 sind Nockenelemente 13 und ein Schaltelement 14 aufgebracht. Die Nockenelemente 13 sind paarweise zueinander beabstandet auf dem Trägerrohr 12 angeordnet, und ein erstes Paar aus beispielhaft zwei Nockenelementen 13 befindet sich auf einer ersten Seite eines Lagerabschnittes 15 des Trägerrohres 12, und ein weiteres Paar aus beispielhaft zwei Nockenelementen 13 befindet sich auf der gegenüberliegenden Seite des Lagerabschnittes 15. Ferner sitzt das Schaltelement 14 auf dem Trägerrohr 12 auf, das an ein Paar an Nockenelementen 13 angrenzt.

Das Trägerrohr 12 erstreckt sich um eine Mittelachse 20 herum und weist auf nicht näher gezeigte Weise eine Innenverzahnung auf. Eine Zahnwelle kann durch das Trägerrohr 12 hindurchgeführt werden, sodass eine Außenverzahnung der Zahnwelle mit der Innenverzahnung im Trägerrohr 12 in Eingriff gebracht werden kann. Dadurch kann bei einer Rotation der Zahnwelle das Verschiebeelement 11 ebenfalls in Rotation versetzt werden, wobei das Verschiebeelement 11 entlang der Mittelachse 20 längs verschieblich bleibt. Eine axiale Verlagerung kann über das Schaltelement 14 erfolgen, indem ein externer Aktuator mit dem Schaltelement 14 zusammenwirkt. Dadurch kann das Verschiebeelement 11 in beispielsweise zwei axial unterschiedliche Positionen gebracht werden, sodass ein Abgriffselement in einer ersten Position beispielsweise mit einem ersten Nockenelement 13 der Nockenpaare zusammenwirkt, und in einer weiteren Axialposition des Verschiebeelementes 11 kann das gleiche Abgriffselement mit einem zweiten Nockenelement 13 der jeweiligen Nockenpaare zusammenwirken. Zur Lagerung des Verschiebeelementes 11 im Modulgehäuse dient der Lagerabschnitt 15, der einen Zylinderabschnitt des Trägerrohres 12 bildet.

Das dargestellte Verschiebeelement 11 ist einsatzfertig bearbeitet, und beispielsweise können die Nockenkonturen der Nockenelemente 13 sowie das Schaltelement 14 spanend endbearbeitet sein, und das gezeigte Verschiebeelement 11 kann einem weiteren Schritt des erfindungsgemäßen Verfahrens zugeführt werden.

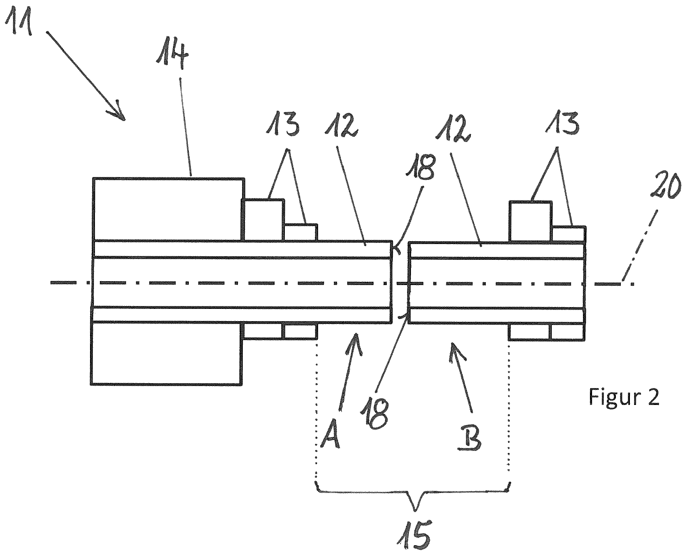

Gemäß einem weiteren wesentlichen Verfahrensschritt ist in Figur 2 das Verschiebeelement 11 mit dem Trägerrohr 12, den Nockenelementen 13 und dem Schaltelement 14 gezeigt, wobei das Trägerrohr 12 erfindungsgemäß durchtrennt wurde. Nach dem Durchtrennen können die Trennflächen 18 noch nachbearbeitet werden. Im Ergebnis erhält man als Zwischenschritt zwei Teile A und B des Verschiebeelementes 11, wobei die Trennung des Trägerrohres 12 im Bereich des Lagerabschnittes 15 erfolgt. Beispielhaft ist die Teilungsebene mittig über dem Lagerabschnitt 15 gezeigt und die Teilungsebene kann auch außermittig liegen.

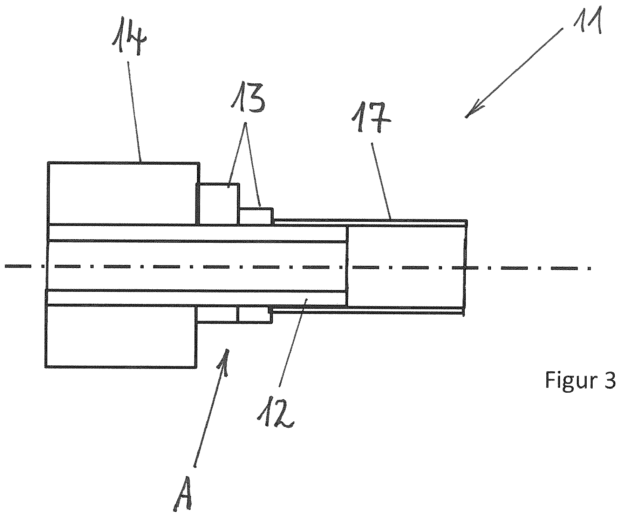

Figur 3 zeigt einen weiteren Verfahrensschritt, gemäß dem eine Verbindungshülse 17 bereitgestellt wird, die auf einen freien Abschnitt des Trägerrohres 12 eines Teils A des Verschiebeelementes 11 aufgebracht wird. Auf dem Teil des Trägerrohres 12 befinden sich damit die Nockenelemente 13, das Schaltelement 14 und die aufgebrachte, beispielsweise aufgepresste Verbindungshülse 17. Auf gleiche Weise könnte die Verbindungshülse 17 auch an das Teil B des Verschiebeelementes 11 aufgeschoben werden, das in Figur 2 gezeigt ist.

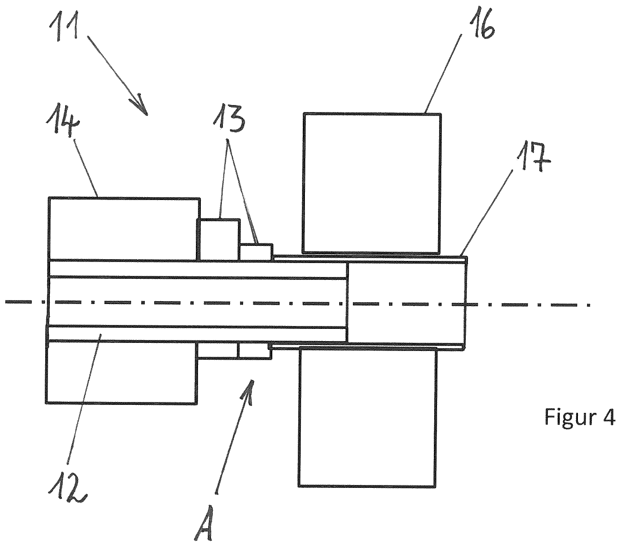

Figur 4 zeigt schließlich die Anordnung des Teils A des Verschiebeelementes 11 mit dem Trägerrohr 12, den Nockenelementen 13 und dem Schaltelement 14 in der Lagerbrücke 16, sodass die Verbindungshülse 17 vollständig durch die Lagerbrücke 16 hindurchgeführt ist. Dabei bildet die Außenumfangsfläche der Verbindungshülse 17 den inneren Gleitpartner des mit der Lagerbrücke 16 gebildeten Gleitlagers, sodass, wie in Figur 5 gezeigt, schließlich der weitere Teil B des Verschiebeelementes 11 mit dem ersten Teil A des Verschiebeelementes 11 wieder gefügt werden kann.

Figur 5 zeigt das einsatzfertige Nockenwellenmodul 100 mit einer Nockenwelle 1, die beispielhaft ein Verschiebeelement 11 aufweist. Das Nockenwellenmodul 100 ist schematisch dargestellt mit einem Modulgehäuse 10, in dem die Lagerbrücke 16 eingebracht ist. Die Lagerbrücke 16 ist dabei ungeteilt und geschlossen ausgeführt. Die beiden Teile A und B des Verschiebeelementes 11 sind von den jeweiligen Seiten der Lagerbrücke 16 mit der Verbindungshülse 17 in diese eingeschoben worden, sodass das Trägerrohr 12 in einem geteilten Zustand Bestandteil des einsatzfertigen Schiebeelementes 11 der Nockenwelle 1 ist. Auf dem einen Teil A des Verschiebeelementes 11 sitzt das erste Paar an Nockenelementen 13 und das Schaltelement 14 auf. Auf der gegenüberliegenden Seite der Lagerbrücke 16 befindet sich das Teil B des Verschiebeelementes 11 mit dem Abschnitt des Trägerrohres 12, und die beiden Abschnitte der Trägerrohre 12 sind über die Verbindungshülse 17 miteinander verbunden, die zugleich den Lagerabschnitt 15 bildet, über den das Verschiebeelement 11 in der Lagerbrücke 16 drehbar gelagert ist.

Zur Fertigstellung der Nockenwelle 1 wird eine Zahnwelle 19 entlang der Mittelachse 20 in die Teile des Trägerrohres 12 hineingeführt. Die Zahnwelle 19 kann beispielsweise außerhalb des Modulgehäuses 10 über ein Antriebsrad angetrieben werden, sodass das Verschiebeelement 11 mit der Zahnwelle 19 mitrotiert. Dabei bleibt das Verschiebeelement 11 in Richtung der Mittelachse 20 axial verschieblich, wobei die dargestellte Axialposition des Verschiebeelementes 11 eine Zwischenposition bildet, die beispielsweise zwischen zwei Schaltpositionen des Verschiebeelementes 11 vorliegen kann.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 100: Nockenwellenmodul
- 1: Nockenwelle
- 10: Modulgehäuse
- 11: Verschiebeelement
- 12: Trägerrohr
- 13: Nockenelement
- 14: Schaltelement
- 15: Lagerabschnitt
- 16: Lagerbrücke
- 17: Verbindungshülse
- 18: Trennfläche
- 19: Zahnwelle
- 20: Mittelachse
- A: Teil des Verschiebeelementes
- B: Teil des Verschiebeelementes

## Patentansprüche

1. Verfahren zur Anordnung einer Nockenwelle (1) in einem Nockenwellenmodul (100) für den Ventiltrieb in einer Brennkraftmaschine, wobei das Nockenwellenmodul (100) ein Modulgehäuse (10) aufweist, in dem wenigstens eine Nockenwelle (1) aufgenommen ist, wobei die Nockenwelle (1) zumindest ein Verschiebeelement (11) mit einem Trägerrohr (12), mit wenigstens zwei Nockenelementen (13) zur Ventilbetätigung und mit einem Schaltelement (14) zur axialen Verstellung des Verschiebelementes (11) im Modulgehäuse (10) aufweist, und wobei die Nockenelemente (13) und das Schaltelement (14) auf dem Trägerrohr (12) so aufgebracht werden, dass ein zwischenliegender Lagerabschnitt (15) zur Lagerung des Verschiebelementes (11) in einer Lagerbrücke (16) des Modulgehäuses (10) gebildet wird, **wobei das Verfahren wenigstens die folgenden Schritte aufweist:**
- Anordnen der Nockenelemente (13) und des Schaltelementes (14) unter Bildung des Lagerabschnittes (15) auf dem Trägerrohr (12) zur Bereitstellung des Verschiebeelementes (11) außerhalb des Modulgehäuses (10);
- Durchtrennen des Trägerrohres (12) im Bereich des Lagerabschnittes (15) in zwei Teile (A, B) durch ein Trennverfahren;
- Anordnen einer Verbindungshülse (17) an einem der beiden Teile (A, B);
- Einführen eines der beiden Teile (A, B) in die Lagerbrücke (16) im Modulgehäuse (10) und
- Fügen des weiteren Teils (A, B) an das in die Lagerbrücke (16) eingeführte Teil (A, B).

2. Verfahren nach Anspruch 1, **dadurch gekennzeichnet, dass** das außerhalb des Modulgehäuses (10) bereitgestellte Verschiebeelement (11) durch wenigstens ein spanendes Bearbeitungsverfahren einsatzfertig bearbeitet wird.

3. Verfahren nach Anspruch 1 oder 2, **dadurch gekennzeichnet, dass** die Verbindungshülse (17) außenseitig auf den Lagerabschnitt (15) des Trägerrohres (12) angeordnet ist.

4. Verfahren nach einem der Ansprüche 1 bis 3, **dadurch gekennzeichnet, dass** die Verbindungshülse (17) außenseitig auf den Lagerabschnitt (15) des Trägerrohres (12) aufgepresst, aufgeschrumpft oder aufgeklebt ist.

5. Verfahren nach einem der vorgenannten Ansprüche, **dadurch gekennzeichnet, dass** das Trägerrohr (12) im Bereich des Lagerabschnittes (15) auf einen kleineren Durchmesser bearbeitet wird, bevor dieses durch ein Trennverfahren in zwei Teile (A, B) geteilt wird.

6. Verfahren nach einem der vorgenannten Ansprüche, **dadurch gekennzeichnet, dass** die Verbindungshülse (17) eine geschliffene und/oder polierte Innenoberfläche und/oder Außenumfangsfläche aufweist.

7. Verfahren nach einem der vorgenannten Ansprüche, **dadurch gekennzeichnet, dass** das Trennverfahren zur Teilung des Trägerrohres (12) durch ein Sägeverfahren, durch ein Trennschleifverfahren oder durch ein thermisches Trennverfahren, insbesondere durch ein Laserstrahlschneidverfahren, gebildet wird.

8. Verfahren nach Anspruch 7, **dadurch gekennzeichnet, dass** durch das Durchtrennen des Trägerrohres (12) Trennflächen (18) gebildet werden, die vor dem Fügen der Verbindungshülse (17) an das Trägerrohr (12) insbesondere spanend bearbeitet werden.

## Claims

1. Method for arranging a camshaft (1) in a camshaft module (100) for the valve drive in an internal combustion engine, wherein the camshaft module (100) comprises a module housing (10) in which at least one camshaft (1) is accommodated, wherein the camshaft (1) comprises at least one displacement element (11) with a carrier tube (12), with at least two cam elements (13) for the valve actuation and with a switching element (14) for the axial adjustment of the displacement element (11) in the module housing (10), and wherein the cam elements (13) and the switching element (14) are attached to the carrier tube (12) such that an interposed bearing section (15) for the mounting of the displacement element (11) in a bearing bridge (16) of the module housing (10) is formed, **wherein the method comprises at least the following steps:**
- arranging the cam elements (13) and the switching element (14) on the carrier tube (12), with the bearing section (15) being formed, so as to provide the displacement element (11) outside the module housing (10);
- cutting the carrier tube (12) in the region of the bearing section (15) into two parts (A, B) by way of a cutting method;
- arranging a connecting sleeve (17) on one of the two parts (A, B);
- inserting one of the two parts (A, B) into the bearing bridge (16) in the module housing (10), and
- joining the further part (A, B) to the part (A, B) inserted into the bearing bridge (16).

2. Method according to Claim 1, **characterized in that** the displacement element (11) provided outside the module housing (10) is machined into a ready-for-use state by way of at least one chip-removing machining process.

3. Method according to Claim 1 or 2, **characterized in that** the connecting sleeve (17) is arranged on the outside of the bearing section (15) of the carrier tube (12).

4. Method according to one of Claims 1 to 3, **characterized in that** the connecting sleeve (17) is pressed, shrink-fitted or adhesively bonded onto the outside of the bearing section (15) of the carrier tube (12).

5. Method according to one of the preceding claims, **characterized in that** the carrier tube (12) is machined to a relatively small diameter in the region of the bearing section (15) before the latter is split into two parts (A, B) by way of a cutting process.

6. Method according to one of the preceding claims, **characterized in that** the connecting sleeve (17) comprises a ground and/or polished inner surface and/or outer circumferential surface.

7. Method according to one of the preceding claims, **characterized in that** the cutting process for the splitting of the carrier tube (12) is realized by way of a sawing process, by way of an abrasive cutting process or by way of a thermal cutting process, in particular by way of a laser-beam cutting process.

8. Method according to Claim 7, **characterized in that**, as a result of the cutting of the carrier tube (12), parting surfaces (18) are formed which are in particular subjected to a chip-removing machining process before the joining of the connecting sleeve (17) to the carrier tube (12).

## Revendications

1. Procédé pour agencer un arbre à cames (1) dans un module d'arbre à cames (100) pour la commande des soupapes dans un moteur à combustion interne, le module d'arbre à cames (100) présentant un boîtier de module (10) dans lequel est reçu au moins un arbre à cames (1), l'arbre à cames (1) présentant au moins un élément coulissant (11) avec un tube de support (12), avec au moins deux éléments de cames (13) pour l'actionnement des soupapes et avec un élément de commutation (14) pour le réglage axial de l'élément coulissant (11) dans le boîtier de module (10), et les éléments de cames (13) et l'élément de commutation (14) étant montés sur le tube de support (12) de telle sorte qu'une portion de palier intermédiaire (15) pour le support de l'élément coulissant (11) soit supportée dans un pont de palier (16) du boîtier de module (10), le procédé présentant au moins les étapes suivantes :
- agencement des éléments de cames (13) et de l'élément de commutation (14), en formant la portion de palier (15), sur le tube de support (12) pour placer l'élément coulissant (11) à l'extérieur du boîtier de module (10) ;
- séparation du tube de support (12) dans la région de la portion de palier (15) en deux parties (A, B) par un procédé de séparation ;
- agencement d'une douille de connexion (17) au niveau de l'une des deux parties (A, B) ;
- insertion de l'une des deux parties (A, B) dans le pont de palier (16) dans le boîtier de module (10), et
- assemblage de l'autre partie (A, B) sur la partie (A, B) insérée dans le pont de palier (16) .

2. Procédé selon la revendication 1, **caractérisé en ce que** l'élément coulissant (11) placé l'extérieur du boîtier de module (10) est usiné prêt à l'utilisation par au moins un procédé d'usinage par enlèvement de copeaux.

3. Procédé selon la revendication 1 ou 2, **caractérisé en ce que** la douille de connexion (17) est disposée du côté extérieur sur la portion de palier (15) du tube de support (12).

4. Procédé selon l'une quelconque des revendications 1 à 3, **caractérisé en ce que** la douille de connexion (17) est pressée, frettée ou collée du côté extérieur sur la portion de palier (15) du tube de support (12).

5. Procédé selon l'une quelconque des revendications précédentes, **caractérisé en ce que** le tube de support (12) est usiné dans la région de la portion de palier (15) à un plus petit diamètre avant que celui-ci ne soit divisé en deux parties (A, B) par un procédé de séparation.

6. Procédé selon l'une quelconque des revendications précédentes, **caractérisé en ce que** la douille de connexion (17) présente une surface intérieure et/ou une surface périphérique extérieure meulée et/ou polie.

7. Procédé selon l'une quelconque des revendications précédentes, **caractérisé en ce que** le procédé de séparation pour séparer le tube de support (12) est formé par un procédé de sciage, par un procédé de tronçonnage ou par un procédé de séparation thermique, en particulier par un procédé de découpage au faisceau laser.

8. Procédé selon la revendication 7, **caractérisé en ce que** des surfaces de séparation (18) sont formées par la séparation du tube de support (12), lesquelles sont usinées notamment par enlèvement de copeaux avant l'assemblage de la douille de connexion (17) sur le tube de support (12).
